# EUROPEAN PATENT APPLICATION

(11) **EP 1 858 270 A1**
(43) Date of publication of application: **21.11.2007**
(21) Application number: 06715187.8
(22) Date of filing: 03.03.2006
(51) Int. Cl.: H04Q 7/22, H04Q 7/38

(54) **MOBILE COMMUNICATION TERMINAL AND METHOD FOR NOTIFYING HANDOVER OPERATION**

(30) Priority: 07.03.2005 JP 2005062543
(71) Applicant: NEC Corporation, Minato-ku Tokyo 108-8001 (JP)
(72) Inventor: KIRIBAYASHI, Shinji, , Tokyo, 1088001 (JP)
(74) Representative: Vossius & Partner
(86) International application number: PCT/JP2006/304104
(87) International publication number: WO 2006/095652

(57) **Abstract**

A voice interruption, which occurs during handover between mobile communication networks that are different from each other, is notified to a speaker. A mobile communication terminal, which has a function to handover between mobile communication networks that are different from each other, has a notification unit that performs a notification operation to notify the speaker of a handover between mobile communication networks. The notification unit is kept operating for a predetermined time to cover at least an instantaneous break period of voice data, caused by a handover between mobile communication systems, either (1) when radio units are switched because communication methods are switched or (2) when the voice data methods are switched because communication methods are switched.

## Description

### FIELD OF THE INVENTION

The present invention relates to a mobile communication terminal and a method for notifying the handover operation, and more particularly, to a mobile communication terminal that has a handover function for use between mobile communication networks using different communication methods and to a method for notifying the handover operation between different mobile communication networks.

### BACKGROUND ART

A mobile communication network using TDMA(Time Division Multiple Access) such as the PDC(Personal Digital Cellular) method, PHS(Personal Handyphone System) method, and GSM(Global System for Mobile Communications) method, a mobile communication network using CDMA(Code Division Multiple Access) called cdmaOne, and, in addition, a mobile communication network using the W-CDMA method and the CDMA2000 method, which belong to the third generation, are built.

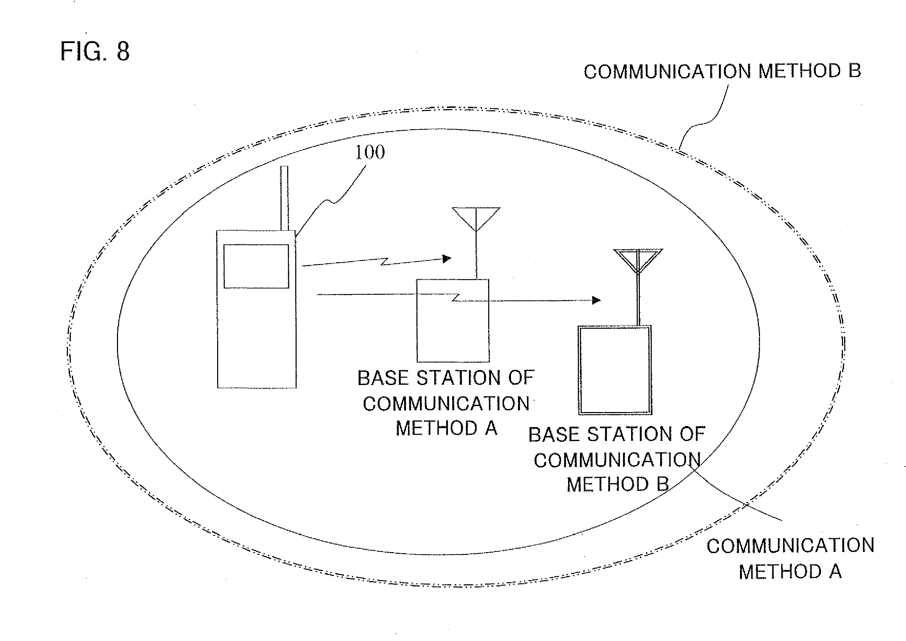

The service areas of those mobile communication networks overlap each other, as shown in FIG. 8, not only between different carriers (communication operators) but also between the same carrier (communication operator) because the communication methods differ from one to another among terminal generations.

One mobile phone, capable of connecting to multiple mobile communication networks, can switch from one mobile communication network to another during communication for higher communication quality or a lower communication charge, thus providing the user with a great convenience. This type of mobile communication terminal is implemented by installing hardware compatible with a communication method used by each of the mobile communication networks. For example, a mobile terminal compatible with the PDC method and the PHS method or a mobile terminal compatible with the W-CDMA method and the GSM method is known. Patent Document 1 introduces a mobile communication terminal that implements the function described above by installing software that enables the terminal to work with each of the mobile communication systems.

Patent Document 1: Japanese Patent Publication Kokai Publication No.JP-P2003-101474A

### SUMMARY OF THE DISCLOSURE

### PROBLEMS TO BE SOLVED BY THE INVENTION

However, the handover between different mobile communication networks described above has problems that the communication is interrupted for a short time at switching time, the voice quality is degraded, and a voice call is broken instantaneously. The most inconvenient problem resides in that the caller cannot recognize at all that a part of a conversation is not transmitted to a receiver.

### MEANS TO SOLVE THE PROBLEMS

In a first aspect of the present invention, there is provided a mobile communication terminal having a function to handover between mobile communication networks that use communication methods that are different to each other. The mobile communication terminal comprises a notification unit that performs a predetermined notification operation for an operator at least during handover between mobile communication networks.

In a second aspect of the present invention, there is provided a handover operation notification method that uses the mobile communication terminal to detect a predetermined handover start trigger so as to let the speaker become aware of a possible occurrence of a phenomenon in which the voice quality is degraded or a voice call is interrupted.

### MERITORIOUS EFFECTS OF THE INVENTION

In accordance with the present invention, a mobile communication terminal user can give a pause before continuing a chat or repeat what he or she said, considering the phenomenon in which the voice quality is degraded or the voice call is interrupted.

### BRIEF DESCRIPTION OF THE DRAWINGS

FIG. 1 is a block diagram showing the general configuration of a mobile phone terminal in one example of the present invention.
FIG. 2 is a diagram showing the configuration of a mobile phone terminal in a first example of the present invention.
FIG. 3 is a diagram showing the flow of the setting operation of the mobile phone terminal in the first example of the present invention.
FIG. 4 is a flowchart showing the operation of the first example of the present invention.
FIG. 5 is a timing diagram showing the operation of the first example of the present invention.
FIG. 6 is a flowchart showing the operation of a second example of the present invention.
FIG. 7 is a timing diagram showing the operation of the second example of the present invention.
FIG. 8 is a diagram showing the overview of a mobile communication network.

### EXPLANATIONS OF SYMBOLS

- 11: Notification unit
- 12: Speaker 1
- 13: Speaker 2
- 14: Microphone
- 15: Amplifier/path control unit
- 16: Sound data processing unit
- 17: Sound source (unit)
- 18: Voice (Speech) data processing unit
- 20: User operation unit
- 21: Display unit
- 22: Input unit
- 31: Multi-mode transmission/reception unit
- 33A, 33B: Protocol control unit
- 34A, 34B: Radio control unit
- 35A, 35B: Radio unit
- 100: Mobile phone terminal

### PREFERRED MODES FOR CARRYING OUT THE INVENTION

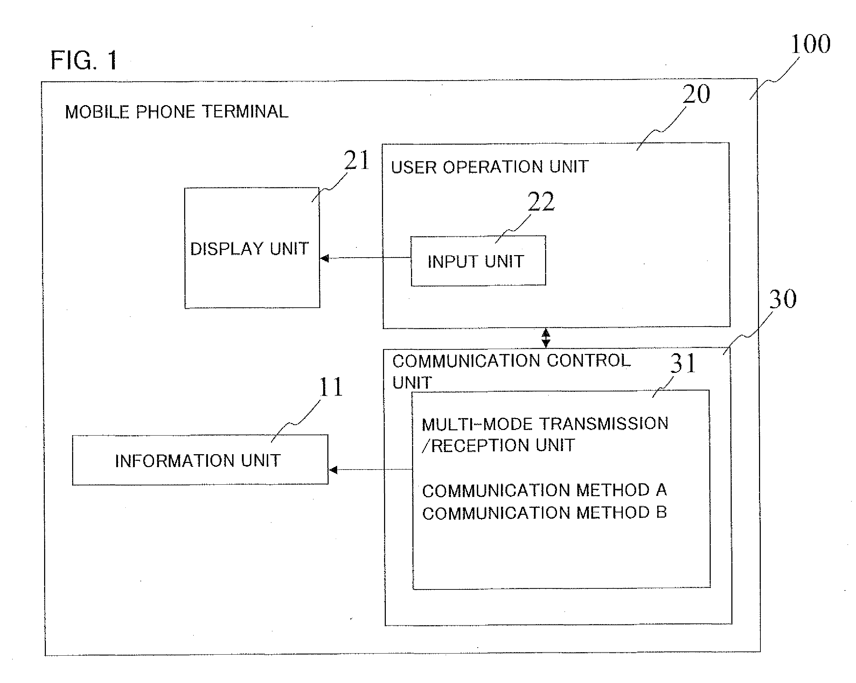

Next, the preferred modes for carrying out the present invention will be described in detail with reference to the drawings. FIG. 1 is a block diagram showing the general configuration of a mobile phone terminal in this example. FIG. 1 shows a mobile phone terminal 100 that comprises a notification unit 11, a display unit 21, a user operation unit 20, and a communication control unit 30 that has a multi-mode transmission/reception unit 31 that supports communication methods including communication method (or system) A and communication method (or system) B.

The notification unit 11 is a speaker, a vibrator, or a light-emitting device that notifies the operator that a handover is being conducted between mobile communication networks. Call notification means provided in the mobile phone terminal 100 can be used for the notification unit 11.

The display unit 21 is, for example, a liquid crystal display device provided on the mobile phone terminal 100. The user operation unit 20 includes an input unit 22 such as input buttons or a pointing device provided on the mobile phone terminal 100.

The multi-mode transmission/reception unit 31 comprises a multi-band antenna (aerial wire), a power feeder, and a transmission/reception high-frequency amplifier, which are not shown, for sending and receiving radio signals to and from base stations belonging to the mobile communication networks that use the methods such as PDC, PHS, GSM, or CDMA described above.

The mobile phone terminal 100, configured as described above, monitors the quality QoS of communication with a nearest base station belonging to each mobile communication network. For example, if the communication quality Qos becomes equal to or lower than a predetermined value during a call via a first mobile communication network that uses communication method A, the mobile phone terminal 100 performs an operation (hereinafter may be called "an inter-network handover", too) to switch to a second mobile communication network that uses communication method B.

The mobile phone terminal 100 starts the inter-network handover described above and, in addition, starts the notification unit 11 at the same time a handover request is sent to the switching source/destination base station for performing a predetermined operation for a predetermined period of time. This notification operation is continued long enough to cover the instantaneous break period of voice (speech) data caused by the above-described inter-network handover. This notification operation allows the operator to become aware of occurrence of a state where a voice interruption or voice quality degradation is likely to occur.

### FIRST EXAMPLE

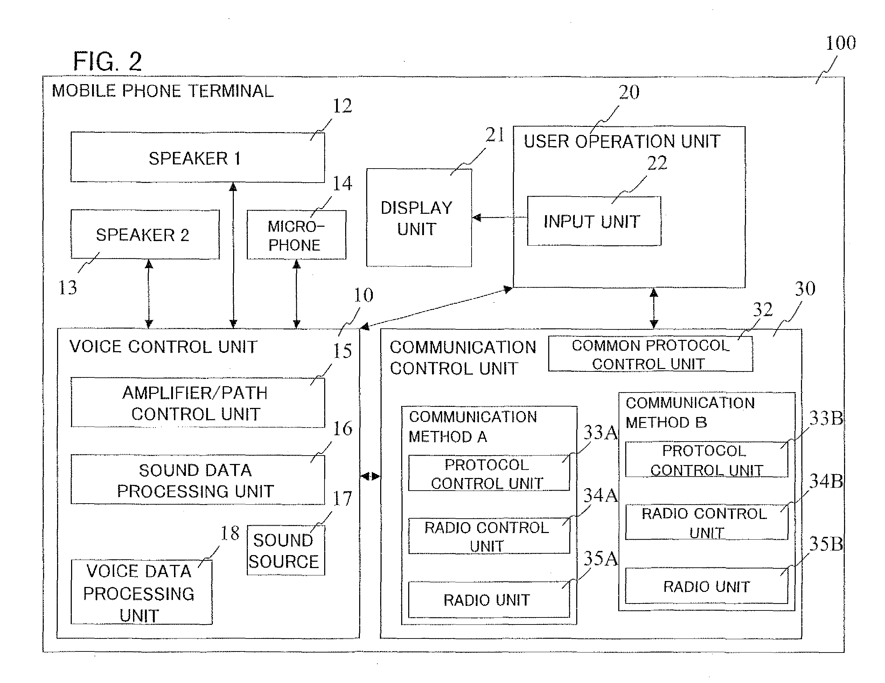

Next, first and second examples will be described in detail with reference to the drawings to describe in more detail the start/stop timing of an inter-network handover notification sound. FIG. 2 is a diagram showing the configuration of a mobile phone terminal in a first example of the present invention. The following describes an example of a mobile phone terminal that has two protocol control units, two radio control units, and two radio units to process both communication method A and communication method B.

A voice control unit 10 is a unit that provides the function for the sound of a mobile phone terminal 100. Referring to the block diagram in FIG. 2, the voice (speech) control unit 10, to which multiple speakers 12 and 13 and a microphone 14 are connected, comprises: an amplifier/path control unit 15 that generates an analog-converted sound at a predetermined sound volume from a predetermined speaker, a sound data processing unit 16 that converts digital data, output from a sound source (unit) 17 and a voice data processing unit 18, to analog data, the sound source (unit) 17 that generates an electronic sound such as a ringing tone, and a voice data processing unit 18 that encodes/decodes a call voice.

A user operation unit 20 is a unit that provides the function for the user interface. In the block diagram shown in FIG. 2, the user operation unit 20 has an input unit 22 such as input buttons or a pointing device and can display the accepted results of the settings and the status of the mobile phone terminal 100 on a display unit 21 such as a liquid crystal display that is connected.

A communication control unit 30 is a unit that controls communication with mobile communication networks including base stations. In the block diagram shown in FIG. 2, the communication control unit 30 includes, under control of a common protocol control unit 32, protocol control units 33A and 33B that transfer information to and from a mobile communication network according to a predetermined protocol, radio units 35A and 35B that transfer physical information to and from base stations, and radio control units 34A and 34B, making it possible to use both communication method A and communication method B.

Although the mobile phone terminal 100 has a power control unit, an external interface control unit, and so on, they are omitted here because they are not related directly to the present invention.

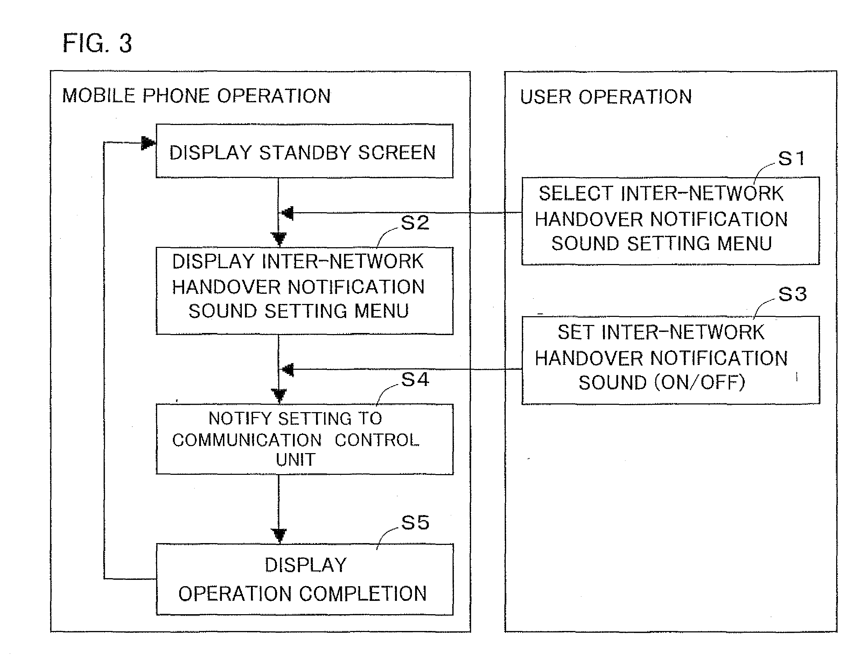

Next, referring to FIG. 3, the following describes the flow of the setting operation on the mobile phone terminal 100. To receive inter-network handover notification, the user must enable the corresponding function on the mobile phone terminal 100 in advance. When the user selects the menu item of inter-network handover notification from the menu of the mobile phone terminal 100 via the user operation unit 20 (step S1), the setting screen of the inter-network handover notification sound is displayed (step S2). If the user selects, via the user operation unit 20, a setting specifying whether or not the inter-network handover notification sound be generated (ON/OFF) (step S3), the selected setting is notified to the communication control unit 30 (step S4).

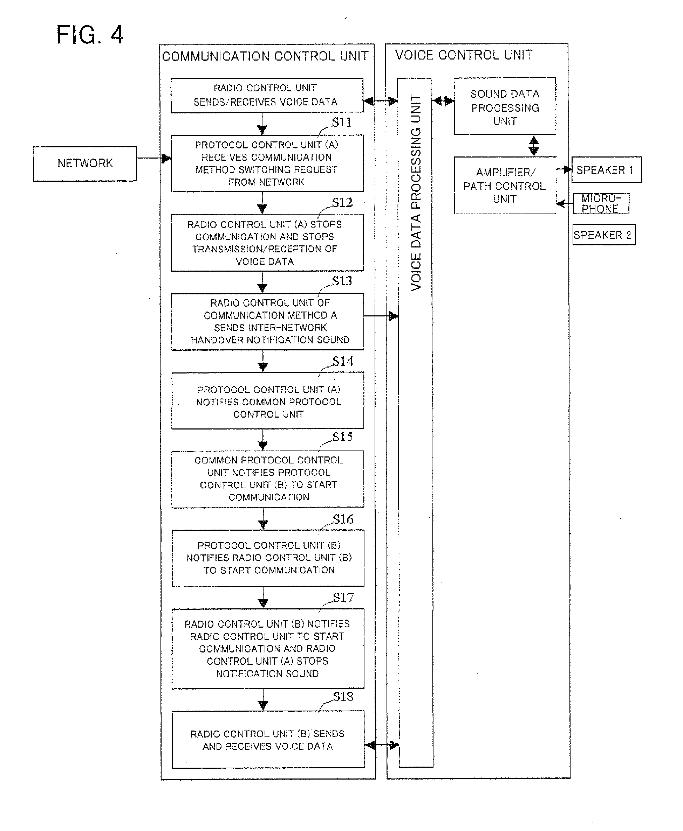

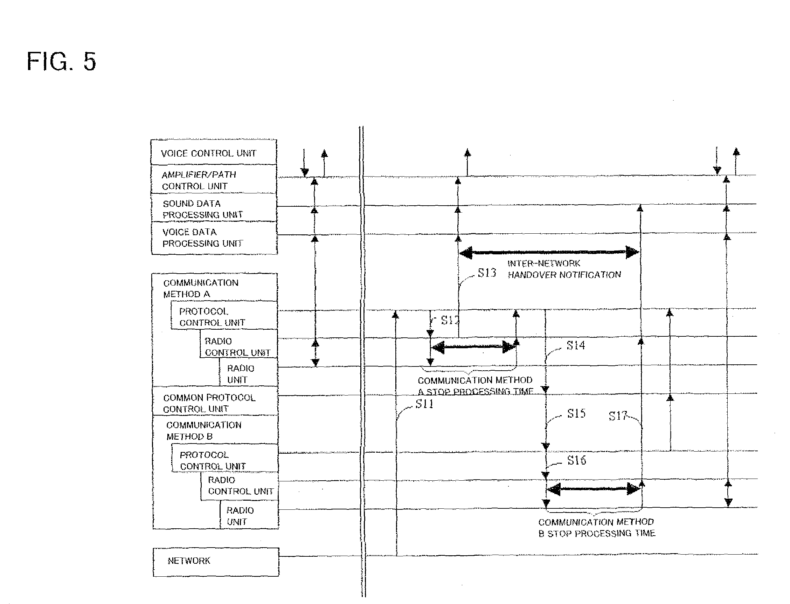

Next, referring to the drawings, the following describes the flow of the inter-network handover operation on the mobile phone terminal 100 and its notification operation. FIG. 4 and FIG. 5 are a flowchart and a timing diagram showing the inter-network handover operation and its notification operation. Referring to FIG. 4 (FIG. 5), when a communication method switching request is made by a command from a network during the transmission/reception (during call) of voice data via communication method A (step S11), the protocol control unit 33A instructs the radio control unit 34A to stop communication, performed via communication method A, for stopping the communication via communication method A (step S12).

In response to the instruction, the radio control unit 34A controls the radio unit 35A to stop communication and, after instructing the radio unit 35A to stop communication, the radio control unit 34A sends an inter-network handover notification sound to the voice control unit 10 as a downstream voice (step S13). This causes the inter-network handover notification sound to be output from the speaker.

After the communication method A stop processing, which is indicated by the communication method A stop processing time in FIG. 5, is terminated, the communication start procedure via communication method B is executed. When the protocol control unit 33A notifies to the common protocol control unit 32 that communication method A is completely stopped (step S14), the common protocol control unit 32 instructs the protocol control unit 34B to start communication (step S15).

In response to the communication start instruction, the protocol control unit 33B instructs the radio control unit 34B to start communication for starting communication via communication method B (step S16). In response to the instruction, the radio control unit 34B controls the radio unit 35B to start communication.

When the radio unit 35B is ready to start communication, the radio control unit 34B instructs the radio control unit 34A to stop the inter-network handover notification sound (step S17). In response to the instruction to stop the inter-network handover notification sound, the radio control unit 34A notifies the voice control unit 10 to perform the reverse of step S13 described above to stop the inter-network handover notification sound.

After that, voice data is sent and received (phone call) via communication method B (step S18). As described above, this example allows a mobile phone terminal operator to become aware of an instantaneous communication-data break or temporary voice quality degradation, caused by mobile communication network switching during a phone call, and to carry out a chat with this condition in mind.

### SECOND EXAMPLE

In the first example described above, an example is shown in which, at the same time the communication is stopped, the radio control unit instructs the voice control unit 10 to output an inter-network handover notification sound. It is also possible for the protocol control unit of a mobile phone terminal, which has the similar configuration, to issue an instruction to output the inter-network handover notification sound. The following describes a second example of the present invention, and the duplicate description already described in the first example is omitted.

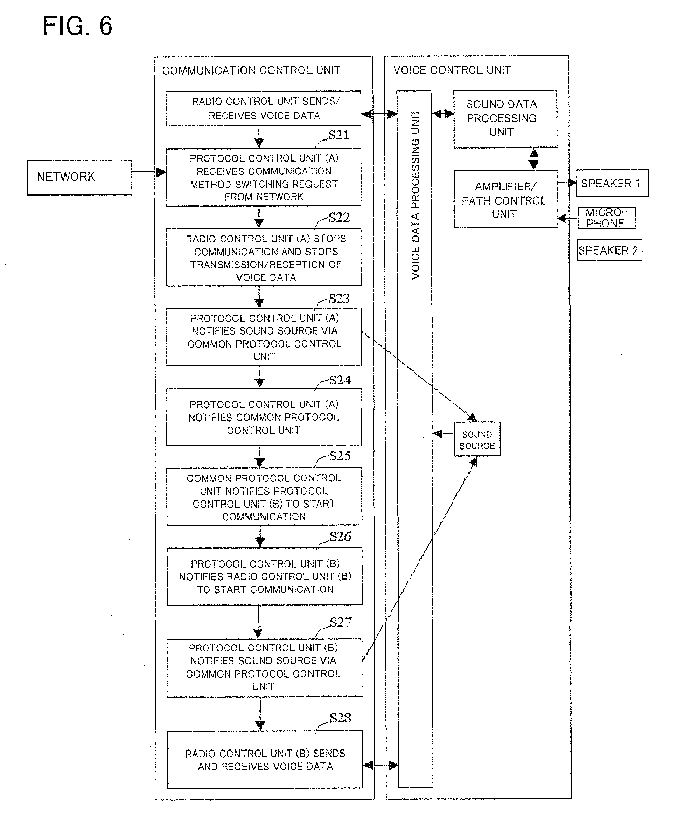

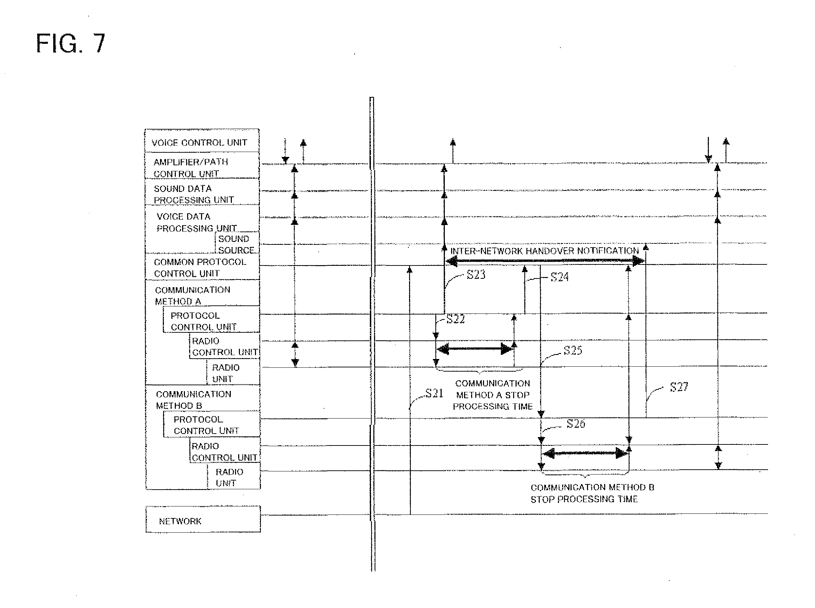

FIG. 6 and FIG. 7 are another flowchart and another timing diagram showing the flow of the inter-network handover operation and its notification operation. Referring to FIG. 6(FIG. 7), when a communication method switching request is made by a command from a network during the transmission/reception (during call) of voice data via communication method A (step S21), a protocol control unit 33A instructs a radio control unit 34A to stop communication, performed via communication method A, for stopping the communication via communication method A (step S22).

In response to the instruction, the radio control unit 34A controls a radio unit 35A to stop communication. On the other hand, after instructing the radio control unit 34A to stop communication, the protocol control unit 33A requests a sound source (unit) 17 to generate an inter-network handover notification sound via a common protocol control unit 32 (step S23). Thereafter, a predetermined voice pattern is generated from the speaker via a voice data processing unit 18, sound data processing unit 16, and amplifier/path control unit 15 in the same way a ringing tone is output.

After the communication method A stop processing, which is indicated by the communication method A stop processing time in FIG. 7, is terminated, the communication start procedure via communication method B is executed. When the protocol control unit 33A notifies to the common protocol control unit 32 that communication method A is completely stopped (step S24), the common protocol control unit 32 instructs a protocol control unit 33B to start communication (step S25).

In response to the communication start instruction, the protocol control unit 33B instructs the radio control unit 34B to start communication for starting communication via communication method B (step S26). In response to the instruction, the radio control unit 34B controls a radio unit 35B to start communication.

When the radio unit 35B is ready to start communication, the protocol control unit 33B instructs the sound source (unit) 17 to stop the inter-network handover notification sound (step S27). In response to the instruction to stop the inter-network handover notification sound, the sound source (unit) 17 stops the output of the inter-network handover notification sound.

After that, voice data is sent and received (phone call) via communication method B (step S28). As described above, this example allows a mobile phone terminal operator to become aware of an instantaneous communication-data break or temporary voice quality degradation, caused by mobile communication network switching (handover) during a phone call, and to carry out a chat with this condition in mind.

For example, when the user is moving, the chat content is instantaneously broken frequently by the inter-network handover described above. In contrast, a user who carries the mobile phone terminal according to the examples described above can wait until the inter-network handover notification sound stops and then continue the chat or take an appropriate action, for example, repeat the important part.

While the modes and examples of the present invention have been described, it is to be understood that notification means other than the speaker described above can be used if the means can notify the operator that an inter-network handover has occurred. Although the present invention is applied to a mobile phone terminal in the examples and examples of the present invention described above, it is apparent that the present invention is applicable also to other devices that have the phone call function such as a PDA(Personal Digital Assistant) and a wearable terminal.

Although, in the examples described above, the user selects the setting specifying only whether to generate the inter-network handover notification sound (ON/OFF) from the menu screen of a mobile phone terminal, it is also possible for the user to change the notification sound pattern or, when there is notification means other than the speaker described above, to select a combination of one or more those means.

The output sound volume of the inter-network handover notification sound may be set to a higher volume regardless of the output level of the ringing tone of the mobile phone terminal 100. A higher sound volume enables the speaker to be aware of the notification sound even in a noisy place such as in a train.

## Claims

1. A mobile communication terminal having a function to handover between mobile communication networks that use communication methods that are different from each other, said mobile communication terminal comprising:
a notification unit that performs a predetermined notification operation for an operator at least during handover between mobile communication networks.

2. The mobile communication terminal as defined by claim 1, further comprising:
a notification operation setting unit that sets the notification operation on or off.

3. The mobile communication terminal as defined by claim 1 or 2, further comprising:
a notification operation selection unit that selectively sets a type of the notification operation.

4. The mobile communication terminal as defined by any one of claims 1-3 wherein
said notification unit is started when communication with a base station of a switching-source mobile communication network is disconnected.

5. The mobile communication terminal as defined by any one of claims 1-4 wherein
said notification unit is started when a handover request from the switching-source mobile communication network is received.

6. The mobile communication terminal as defined by any one of claims 1-5 wherein
said notification unit is started when a handover request from said mobile communication terminal is sent.

7. The mobile communication terminal as defined by any one of claims 1-6 wherein
said notification unit outputs a predetermine notification sound from a speaker of said mobile communication terminal, and
the notification sound is output for a predetermined period including a start point at which a voice call is interrupted by the handover between the mobile communication networks.

8. A handover operation notification method using a mobile communication terminal having a function to handover between mobile communication networks that use communication methods that are different from each other, said handover operation notification method comprising the steps of:
detecting, by a radio control unit of said mobile communication terminal, a stop of communication with a base station of a switching-source mobile communication network; and
starting, by a notification unit of said mobile communication terminal, a predetermined notification operation, triggered by a stop of the communication with the base station of the switching-source mobile communication network.

9. A handover operation notification method using a mobile communication terminal having a function to handover between mobile communication networks that use communication methods that are different from each other, said handover operation notification method comprising the steps of:
detecting, by a protocol control unit of said mobile communication terminal, a reception of a handover request from a switching-source mobile communication network; and
starting, by a notification unit of said mobile communication terminal, a predetermined notification operation, triggered by a reception of the handover request.

10. A handover operation notification method using a mobile communication terminal having a function to handover between mobile communication networks that use communication methods that are different from each other, said handover operation notification method comprising the steps of:
sending, by a communication control unit of said mobile communication terminal, a handover request to a switching-destination base station; and
starting, by a notification unit of said mobile communication terminal, a predetermined notification operation, triggered by a transmission of the handover request.
